# EUROPÄISCHE PATENTSCHRIFT

(11) **EP 3 840 941 B1**
(45) Veröffentlichungstag und Bekanntmachung des Hinweises auf die Patenterteilung: **13.03.2024**
(21) Anmeldenummer: 19734229.8
(22) Anmeldetag: 22.05.2019
(51) Int. Cl.: B29C 65/34, F16L 47/03, B29K 101/12, B29L 23/00

(54) **VERFAHREN ZUM HERSTELLEN EINER SCHWEISSVERBINDUNG SOWIE SCHWEISSGERÄT**
METHOD FOR PRODUCING A WELDED CONNECTION, AND WELDING DEVICE
PROCÉDÉ DE PRODUCTION D'UNE LIAISON SOUDÉE AINSI QU'APPAREIL DE SOUDAGE

(43) Veröffentlichungstag der Anmeldung: 30.06.2021
(73) Patentinhaber: agru Kunststofftechnik Gesellschaft m.b.H., 4540 Bad Hall (AT)
(72) Erfinder: LUEGHAMER, Albert, 4522 Sierning (AT); SEVERA, Gerald, 4540 Bad Hall (AT)
(74) Vertreter: Burger, Hannes
(86) Internationale Anmeldenummer: PCT/AT2019/060169
(87) Internationale Veröffentlichungsnummer: WO 2020/232479

(56) Entgegenhaltungen:
- JP-A- 2000 035 178

## Beschreibung

Die Erfindung betrifft ein Verfahren zum Herstellen einer Schweißverbindung eines Leitungselementes mit einem Verbindungselement.

Das Verbinden von Leitungselementen aus einem Thermoplast mit Hilfe einer ebenfalls thermoplastischen, mit einem Heizelement versehenen Verbindungselement ist allgemein bekannt. Unter Leitungselementen werden hierbei Rohrleitungsteile, Armaturen und Formstücke verstanden, die durch die Verbindungselemente zu Leitungen und Leitungsnetzen zusammengefügt werden. Die Verbindungselemente sind hierbei häufig als Elektroschweißmuffen und als elektrische schweißbare Anschluss- und Anbohrschellen ausgebildet. Die Verbindungselemente können jedoch auch für das Verbinden anderer Elemente als Rohrleitungselemente verwendet werden, z.B. zum Zusammenfügen von Stangenteilen, doch stellt die Verwendung von schweißbaren Verbindungselementen im Rohrleitungsbau eines der häufigsten Anwendungsgebiete dar. Damit die Verbindung von Leitungselementen mittels solchen Verbindungselementen zuverlässig erfolgt, ist eine Kontrolle der Verschweißung erwünscht. Die EP0173174A1 geht davon aus, dass die Qualität der Verschweißung im Wesentlichen von der richtigen Temperatur im Schweißbereich und dem beim Schweißvorgang entstehenden Schweißdruck abhängig ist, d.h. von dem Druck, der auf das durch die zugeführte Wärme plastifizierte Material in der Schweißzone ausgeübt wird. Dieser entsteht dadurch, dass dem Verbindungselement eine Schrumpfreserve erteilt wird, die sich beim Plastifizieren des Schweißbereiches durch die zugeführte Wärme in einem Schrumpfen des Verbindungselementes äußert. Dieses Schrumpfen, verbunden mit der Volumenvergrößerung des Materials beim Erwärmen des Schweißbereiches, bewirkt diese Drucksteigerung in dem Schweißbereich.

Da alle Umstände, die das Erreichen der richtigen Schweißtemperatur und des Schweißdruckes verhindern, eine Qualitätsverminderung der Schweißverbindung darstellen, werden schon seit längerer Zeit die Verbindungselemente mit zusätzlichen Anzeigemitteln versehen, welche Rückschlüsse auf die Qualität der Schweißung geben sollen.

Bei einer bekannten Anzeigevorrichtung wird ein Farbumschlagpunkt verwendet, der auf der äußeren Muffenoberfläche angebracht wird und bei genügender Erwärmung des Körpers des Verbindungselementes seine Farbe wechselt. Damit eine verbesserte Temperaturanzeige erreicht wird, ist es aus der CH 553 368 bekannt, den Farbumschlagpunkt an eine Stelle geringerer Wandstärke anzuordnen. Aber auch in diesem Fall kann nur die Temperatur festgestellt werden, nicht aber der Schweißdruck, und zudem besteht die Unsicherheit, dass durch äußere Wärmebeeinflussung ein Farbumschlag erfolgen kann.

Da die Temperaturanzeige am Verbindungselement allein keine zuverlässigen Rückschlüsse auf die Qualität der Schweißung erlaubt, sind auch Lösungen bekanntgeworden, bei denen der in dem Schweißbereich der Schweißung entstehende Druck sichtbar gemacht wird. Hierbei können Schwachstellen im Körper des Verbindungselementes vorgesehen werden, die sich durch den entstehenden Schweißdruck ausbeulen. Weiter ist aus der CH 632 078 bekannt, Ausnehmungen vorzusehen, deren Grund in der Nähe des Schweißbereiches endet. Diese füllen sich beim Schweißen mit mehr oder weniger plastischem Material und zeigen somit an, ob ein ausreichender Schweißdruck mit entsprechender Temperatur im Schweißbereich vorhanden ist. Eine aus der CH 601 719 bekannte Verbesserung dieser Qualitätsanzeige für die Schweißung besteht darin, dass in der Bohrung ein Stift angeordnet ist. Dieser erhebt sich beim Auftreten des Schweißdruckes über die Muffenoberfläche und ist dadurch gut erkennbar. Diese Ausführungsform hat sich vor allem bei relativ dünnwandigen Verbindungselementen bewährt. Der hervortretende Stift stellt ein verhältnismäßig genaues Maß für die Temperatur und den Schweißdruck in dem Schweißbereich dar. Bei höheren Schweißdrücken aber, wie sie bei dickwandigeren Verbindungselementen üblich sind, weist diese Ausführungsform den Nachteil auf, dass die Tiefe der Bohrung schwierig festzulegen ist. Ist der Grund der Bohrung zu nahe beim Schweißbereich, erfolgt die Bewegung des Stiftes zu früh, ist jedoch der Grund der Bohrung vom Schweißbereich entfernt angeordnet, tritt keine Bewegung des Stiftes auf, obwohl der Schweißdruck entstanden ist.

Auch die EP1745917A1 und die DE10225370A1 offenbaren jeweils Elektroschweißmuffen für Rohrleitungsverbindungen aus thermoplastischen Kunststoffen, wobei die Elektroschweißmuffe mit einer Rohrleitung mittels eines Elektroschweißverfahrens verbindbar ist. Zum Herstellen der Verbindung wird eine in der Elektroschweißmuffe eingebettete Heizdrahtwicklung mit einer externen elektrischen Stromquelle verbunden, wodurch die Elektroschweißmuffe bereichsweise aufgeschmolzen wird.

Ein weiteres Elektroschweißverfahren zur Verbindung von Rohrleitungen aus thermoplastischen Kunststoffen mittels einer Elektroschweißmuffe ist aus der JP2000035178A bekannt. Die aus dem Stand der Technik bekannten Elektroschweißmuffen weisen den Nachteil auf, dass bei unzureichend in die Elektroschweißmuffe eingesteckten Rohren keine ausreichende Verbindung zwischen dem Rohr und der Elektroschweißmuffe hergestellt werden kann. Dies führt zu undichten Rohrverbindungen. Außerdem kann ein unzureichend in die Elektroschweißmuffe eingestecktes Rohr dazu führen, dass die Elektroschweißmuffe lokal überhitzt, was im Schlimmsten Fall sogar zu einem Brand führen kann. In den aus dem Stand der Technik bekannten Elektroschweißmuffen ist eine Anzeige zur Kontrolle der richtigen Positionierung der einzelnen Elemente zueinander nur ungenügend gelöst.

Aufgabe der vorliegenden Erfindung war es, die Nachteile des Standes der Technik zu überwinden und ein verbessertes Verfahren zum Verschweißen von Verbindungselementen anzugeben.

Diese Aufgabe wird durch eine Vorrichtung und ein Verfahren gemäß den Ansprüchen gelöst. Erfindungsgemäß ist ein Verfahren zum Verbinden eines thermoplastischen Leitungselementes mit einem Verbindungselement nach Anspruch 1 vorgesehen.

Vom Schweißgerät wird das Verschweißen des Verbindungselementes mit dem zumindest einen thermoplastischen Leitungselement vor dem Ende der geplanten Schweißdauer gestoppt, wenn ein Fehlerkriterium erreicht wird. Alternativ oder zusätzlich wird vom Schweißgerät eine Fehlermeldung ausgegeben, wenn ein Fehlerkriterium erreicht wird.

Das erfindungsgemäße Verfahren weist den Vorteil auf, dass durch das Stoppen des Schweißvorganges vor dem Ende der geplanten Schweißdauer bei Erreichen eines Fehlerkriteriums ein lokales Überhitzen des Verbindungselementes und somit eine kritische Situation, wie etwa der Brand eines Verbindungselementes unterbunden werden kann. Somit kann durch die erfindungsgemäßen Maßnahmen überraschenderweise die Sicherheit beim Verbinden von Leitungselementen mit dem Verbindungselement erhöht werden.

Erfindungsgemäß ist vorgesehen, dass das Fehlerkriterium erreicht wird, wenn in einem im Schweißgerät implementierten Störungszähler eine bestimmte Anzahl an Störungsmeldungen summiert werden. Dies bringt den Vorteil mit sich, dass nicht durch eine einzelne Störungsmeldung, welche beispielsweise durch einen Messfehler auftreten könnte, das Fehlerkriterium erreicht wird, sondern dass das Fehlerkriterium nur dann erreicht wird, wenn aufgrund der erhöhten Anzahl von Störungsmeldungen gesichert ist, dass tatsächlich ein Fehler vorliegt.

Ferner kann vorgesehen sein, dass dem Störungszähler eine Störungsmeldung addiert wird, wenn über einen Störungszeitraum ein Istwert des Schweißstromes außerhalb einer Sollwerttoleranz eines Sollwertes des Schweißstromes liegt. Dies bringt den überraschenden Vorteil mit sich, dass das Fehlerkriterium einfach erfasst werden kann.

Darüber hinaus kann vorgesehen sein, dass dem Störungszähler eine Störungsmeldung addiert wird, wenn über einen Störungszeitraum ein Istwert des Leiterwiderstandes des Heizelementes außerhalb einer Sollwerttoleranz eines Sollwertes des Leiterwiderstandes des Heizelementes liegt. Besonders der Leiterwiderstand kann mittels des Schweißgerätes einfach und zuverlässig erfasst werden, wobei über die Erfassung des Leiterwiderstandes überraschenderweise darauf rückgeschlossen werden kann, ob eine korrekte Verschweißung vorliegt und somit ob das Leitungselement korrekt mit dem Verbindungselement gefügt ist.

Vorteilhaft ist auch eine Ausprägung, gemäß welcher vorgesehen sein kann, dass der Zeitrahmen des Störungszeitraumes in Abhängigkeit von den erfassten Informationen über das zu verschweißende Verbindungselement festgelegt wird. Dies bringt insbesondere den Vorteil mit sich, dass das Abschaltkriterium individuell an das zu verschweißende Verbindungselement angepasst werden kann. Relevante Informationen über das zu verschweißende Verbindungselement können beispielsweise einen Durchmesser bzw. eine Ausgestaltung des Verbindungselementes umfassen. Darüber hinaus können relevante Informationen über das Verbindungselement beispielsweise Informationen über Länge und Durchmesser des Widerstandsheizdrahtes enthalten.

Gemäß einer Weiterbildung ist es möglich, dass der Zeitrahmen des Störungszeitraumes zwischen 1sec und 40sec, insbesondere zwischen 5sec und 30sec, bevorzugt zwischen 8sec und 12sec festgelegt wird. Besonders innerhalb dieser Grenzen hat sich gezeigt, dass ein überraschend zuverlässiges Abschaltkriterium erreicht werden kann.

Ferner kann es zweckmäßig sein, wenn die Sollwerttoleranz des Sollwertes des Schweißstromes und/oder die Sollwerttoleranz des Sollwertes des Leiterwiderstandes des Heizelementes in Abhängigkeit von den erfassten Informationen über das zu verschweißende Verbindungselement festgelegt wird. Dies bringt insbesondere den Vorteil mit sich, dass das Abschaltkriterium individuell an das zu verschweißende Verbindungselement angepasst werden kann. Relevante Informationen über das zu verschweißende Verbindungselement können beispielsweise einen Durchmesser bzw. eine Ausgestaltung des Verbindungselementes umfassen. Darüber hinaus können relevante Informationen über das Verbindungselement beispielsweise Informationen über Länge, Durchmesser, sowie den spezifischen Widerstand des Widerstandsheizdrahtes enthalten.

Darüber hinaus kann vorgesehen sein, dass die Sollwerttoleranz des Sollwertes des Schweißstromes und/oder die Sollwerttoleranz des Sollwertes des Leiterwiderstandes des Heizelementes zwischen 0,1% und 10%, insbesondere zwischen 1% und 5%, bevorzugt zwischen 1,5% und 3% des Betrages des jeweiligen Sollwertes beträgt. Besonders bei einer Toleranzgrenze in diesem Wertebereich hat sich überraschenderweise gezeigt, dass ein zuverlässiges Abschaltkriterium erreicht werden kann.

Weiters kann vorgesehen sein, dass das Fehlerkriterium erreicht wird, wenn im Störungszählermehr als zwei Störungsmeldungen, insbesondere mehr als zwei Störungsmeldungen, bevorzugt mehr als fünf Störungsmeldungen addiert werden. Besonders innerhalb dieses Toleranzbereichs hat sich überraschenderweise gezeigt, dass ein zuverlässiges Abschaltkriterium erreicht werden kann.

Gemäß einer besonderen Ausprägung ist es möglich, dass die Sollwerttoleranz des Sollwertes des Leiterwiderstandes des Heizelementes ausschließlich an der Unterseite des Sollwertes des Leiterwiderstandes definiert ist. Die bringt den überraschenden Vorteil mit sich, dass etwaige Messfehler oder sonstige Fehler, welche fälschlicherweise einen erhöhten Leiterwiderstand detektieren, nicht zu einem Auslösekriterium führen.

Weiters kann vorgesehen sein, dass das Fehlerkriterium erreicht wird, wenn in einem im Schweißgerät implementierten Störungszähler vier Störungsmeldungen summiert werden, wobei dem Störungszähler eine Störungsmeldung addiert wird, wenn über einen Störungszeitraum ein Istwert des Leiterwiderstandes des Heizelementes außerhalb einer Sollwerttoleranz eines Sollwertes des Leiterwiderstandes des Heizelementes liegt, wobei der Zeitrahmen des Störungszeitraumes zwischen 8sec und 12sec festgelegt wird und wobei die Sollwerttoleranz des Sollwertes des Leiterwiderstandes des Heizelementes zwischen 1,5% und 3% des Betrages des jeweiligen Sollwertes beträgt. Eine derartige Kombination der Einzelkriterien bringt den überraschenden Vorteil mit sich, dass zuverlässig ein nicht korrektes Fügen des Leitungselementes und des Verbindungselementes detektiert werden kann und trotzdem keine Fehlinterpretationen bzw. unerwünschte vorzeitige Abschaltungen auftreten. Dieser überraschende technische Effekt tritt nur innerhalb dieser engen Grenzen bzw. in der Kombination der Merkmale auf.

Entsprechend einer vorteilhaften Weiterbildung kann vorgesehen sein, dass der Istwert des Schweißstromes und/oder der Istwert des Leiterwiderstandes des Heizelementes in einem Abfrageintervall zwischen 0,01 sec und 10sec, insbesondere zwischen 0,1sec und 5sec, bevorzugt zwischen 0,9sec und 1,2sec abgefragt wird. Besonders eine Abfrage des Istwertes in diesem Zeitintervall bringt ein ausreichend repräsentatives Ergebnis über den korrekten Fortschritt der Verschweißung mit sich.

Erfindungsgemäß ist ein Schweißgerät zum Verschweißen eines thermoplastischen Leitungselementes mit einem Verbindungselement nach Anspruch 11 vorgesehen.

Das erfindungsgemäße Schweißgerät bringt den Vorteil mit sich, dass die Qualität der Verschweißungen erhöht werden kann.

Das Eingeben von Informationen über das zu verschweißende Verbindungselement in das Schweißgerät kann durch manuelle Eingabe durch einen Maschinenbediener erfolgen. Alternativ dazu ist es auch denkbar, dass das Eingeben von Informationen über das zu verschweißende Verbindungselement in das Schweißgerät durch Erfassen eines am Verbindungselement angebrachten Informationsträgers, wie etwa einem RFID-Chip, oder einem Barcode mittels des Schweißgerätes erfolgt. In wieder einer anderen Alternative ist es auch denkbar, dass das Eingeben von Informationen über das zu verschweißende Verbindungselement in das Schweißgerät durch Erfassen des Leiterwiderstandes mittels des Schweißgerätes erfolgt.

In einer weiteren Ausführungsvariante ist es auch denkbar, dass das Schweißgerät nur zum Verschweißen von einer Type von Verbindungselementen ausgebildet ist. In diesem Fall wird die Informationen über das zu verschweißende Verbindungselement direkt vom Hersteller in das Schweißgerät eingegeben und braucht nicht bei jedem Schweißvorgang gesondert erfasst zu werden.

Insbesondere ist am Schweißgerät ein Eingabeinterface vorgesehen, mittels welchem die Informationen über das zu verschweißende Verbindungselement in das Schweißgerät eingegeben werden kann. Das Eingabeinterface kann beispielsweise eine Tastatur, ein RFID-Leser, ein Barcodeleser oder dergleichen sein.

Zum besseren Verständnis der Erfindung wird diese anhand der nachfolgenden Figuren näher erläutert.

Es zeigen jeweils in stark vereinfachter, schematischer Darstellung:
- Fig. 1: eine Schnittdarstellung eines Ausführungsbeispiels eines Verbindungselementes einer Schweißanordnung;
- Fig. 2: a) eine schematische Darstellung des zeitlichen Verlaufs des Stromes und der Spannung während dem Schweißvorgang einer korrekt durchgeführten Verschweißung;

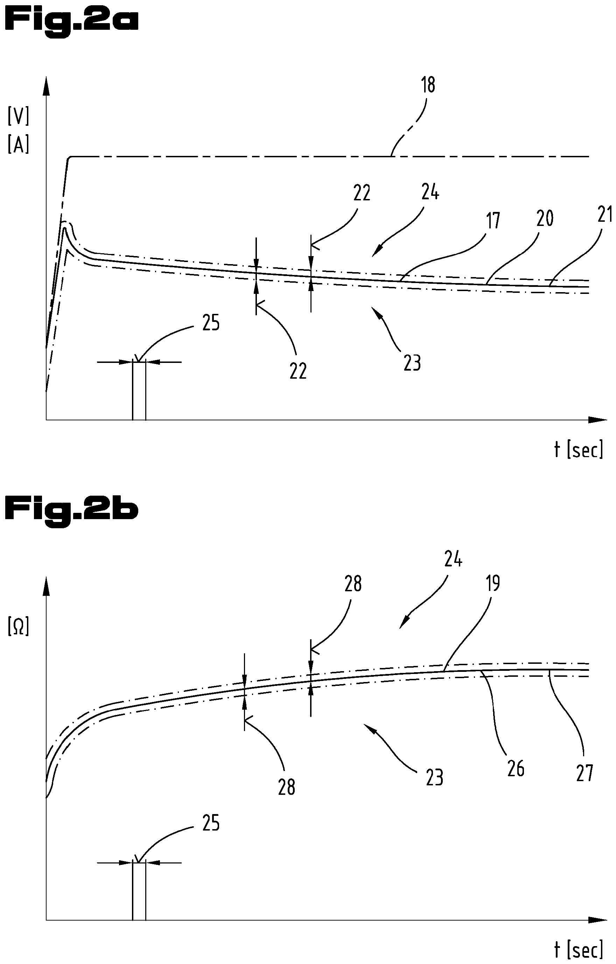

- Fig. 2: b) eine schematische Darstellung des zeitlichen Verlaufs des Innenwiderstandes des Widerstandsheizdrahtes während dem Schweißvorgang einer korrekt durchgeführten Verschweißung;

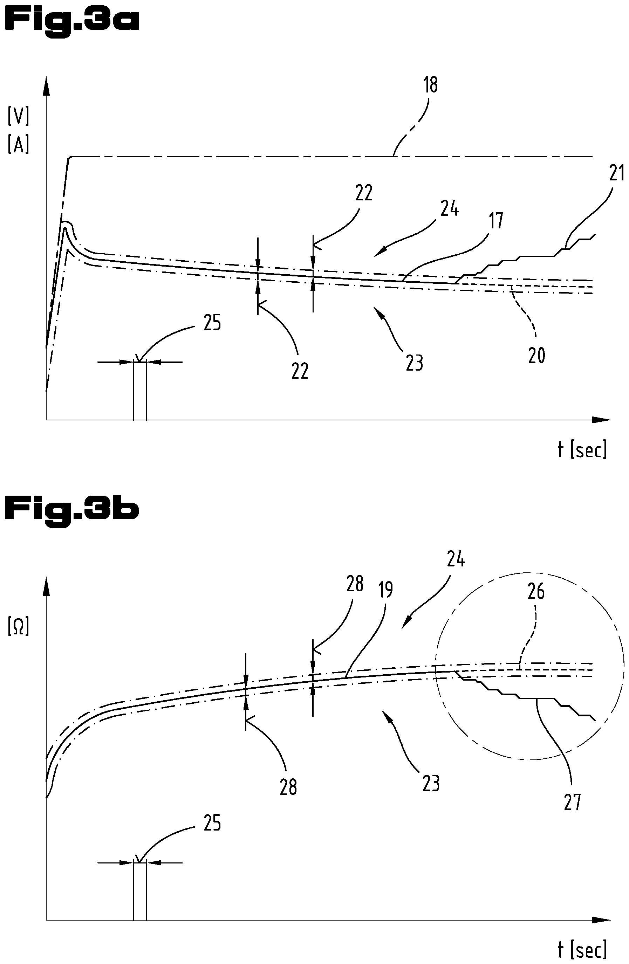

- Fig. 3: a) eine schematische Darstellung des zeitlichen Verlaufs des Stromes und der Spannung während dem Schweißvorgang einer fehlerhaft durchgeführten Verschweißung;
- Fig. 3: b) eine schematische Darstellung des zeitlichen Verlaufs des Innenwiderstandes des Widerstandsheizdrahtes während dem Schweißvorgang einer fehlerhaft durchgeführten Verschweißung;

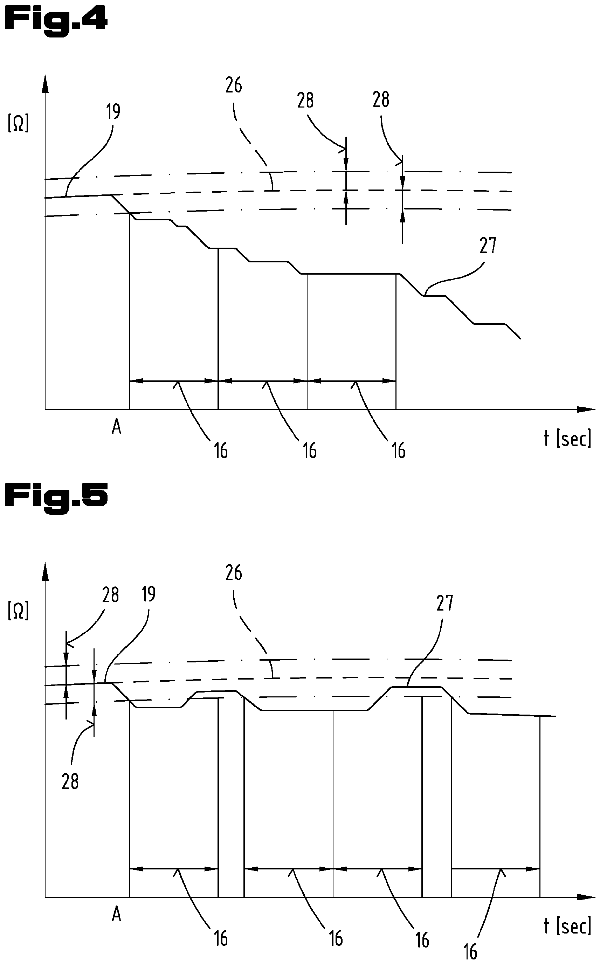

- Fig. 4: eine Detailansicht eines ersten Ausführungsbeispiels zur Erreichung eines Abschaltkriteriums;
- Fig. 5: eine Detailansicht eines zweiten Ausführungsbeispiels zur Erreichung eines Abschaltkriteriums.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

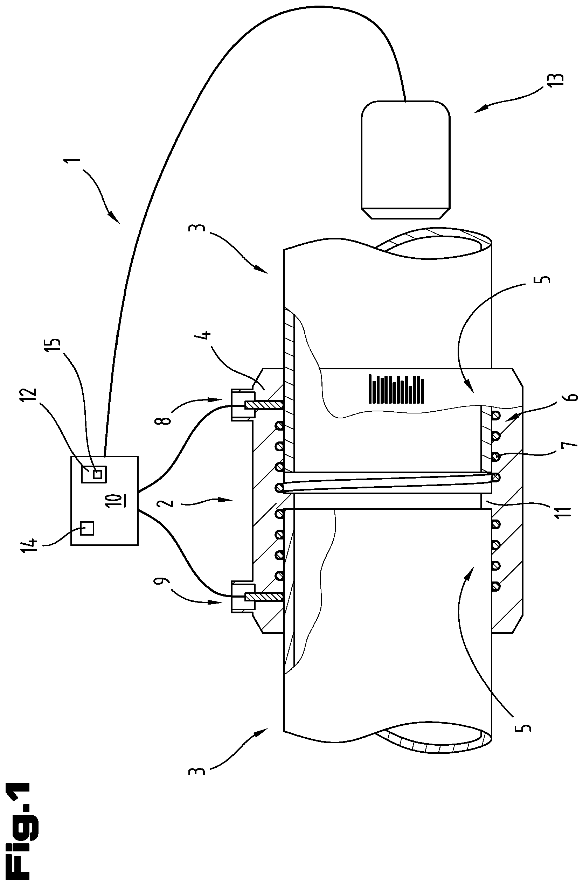

Fig. 1 zeigt ein erstes Ausführungsbeispiel einer Schweißanordnung 1 mit einem Verbindungselement 2 zum Verbinden von Leitungselementen 3.

Im Ausführungsbeispiel nach Fig. 1 ist das Verbindungselement 2 in Form einer Elektroschweißmuffe ausgebildet und die Leitungselemente 3 sind in Form von Rohrleitungen ausgebildet.

Wie aus Fig. 1 ersichtlich, kann vorgesehen sein, dass das Verbindungselement 2 einen thermoplastischen Körper 4 aufweist, in welchem in einem Schweißbereich 5 ein Heizelement 6 angeordnet ist. Das Heizelement 6 kann insbesondere in Form eines Widerstandsheizdrahtes 7 ausgebildet sein.

Beispielsweise ist es denkbar, dass das Verbindungselement 2 zum Verbinden von zwei Leitungselementen 3 dient und somit im Körper 4 des Verbindungselementes 2 zwei Schweißbereiche 5 ausgebildet sind.

Einer der Schweißbereiche 5 dient hierbei zum Verschweißen des Verbindungselementes 2 mit dem ersten Leitungselement 3 und ein zweiter der Schweißbereiche 5 dient hierbei zum Verschweißen des Verbindungselementes 2 mit dem zweiten Leitungselement 3.

Wie aus Fig. 1 weiters ersichtlich, kann vorgesehen sein, dass das Heizelement 6 einen ersten Anschlusspunkt 8 und einen zweiten Anschlusspunkt 9 aufweist, welcher jeweils zum Verbinden mit einem Schweißgerät 10 dienen. Die beiden Anschlusspunkte 8, 9 können, wie in Fig. 1 dargestellt, im Bereich der beiden Längsenden des Verbindungselementes 2 ausgebildet sein, wobei mittels des Schweißgerätes 10 beide Schweißbereiche 5 gleichzeitig erhitzt werden können. Die Schweißbereiche 5 können insbesondere dadurch erhitzt werden, dass mittels des Schweißgerätes 10 ein elektrischer Strom und eine elektrische Spannung an den ersten Anschlusspunkt 8 und den zweiten Anschlusspunkt 9 des Heizelementes 6 angelegt wird. Dadurch und durch den Leiterwiderstand des Heizelementes 6 erhitzt sich das Heizelement 6.

Weiters ist es auch denkbar, dass je Schweißbereich 5 ein erster Anschlusspunkt 8 und ein zweiter Anschlusspunkt 9 für das Schweißgerät 10 ausgebildet sind. Dadurch wird ermöglicht, dass jeder der beiden Schweißbereiche 5 einzeln und unabhängig voneinander erhitzt werden kann und zwischen dem Verbindungselement 2 und dem ersten Leitungselement 3 sowie und zwischen dem Verbindungselement 2 und dem zweiten Leitungselement 3 gesondert eine Schweißverbindung hergestellt werden kann.

Wie aus Fig. 1 weiters ersichtlich, kann vorgesehen sein, dass am Körper 4 des Verbindungselementes 2 ein Anschlag 11 ausgebildet ist, welcher zur korrekten Positionierung der beiden Leitungselemente 3 im Verbindungselement 2 dient. Der Anschlag 11 kann zentral im Verbindungselement 2 ausgebildet sein.

Wie aus Fig. 1 weiters ersichtlich, weist das Schweißgerät 10 eine Steuereinheit 12 auf, welche zur Steuerung des Schweißvorganges bzw. zur Steuerung des Schweißgeräts 10 dient.

Weiters weißt das Schweißgerät 10 ein Eingabeinterface 13 auf, welches mit der Steuereinheit 12 gekoppelt ist. Das Eingabeinterface 13 dient zum Erfassen von Informationen über das zu verschweißende Verbindungselement 2 und/oder über die zu verschweißenden Leitungselemente 3. Im Ausführungsbeispiel nach Fig. 1 ist das Eingabeinterface 13 als Scanner ausgebildet, welcher zum Erfassen eines auf das Verbindungselement 2 aufgedruckten Barcodes dient.

Zusätzlich kann das Schweißgerät 10 eine Anzeigeeinheit 14 umfassen, welche zur Ausgabe von Informationen an einen Maschinenbediener dient. Die Anzeigeeinheit 14 kann mit einem Bedienfeld gekoppelt sein, welches zur Bedienung des Schweißgerätes 10 durch den Benutzer dient.

Weiters kann in der Steuereinheit 12 ein Störungszähler 15 realisiert sein, welcher zur Erfassung von Störungen während dem Schweißvorgang dient. Der Störungszähler 15 kann in der Programmierung der Steuereinheit 12 realisiert sein.

In weiterer Folge wird anhand der Fig. 1 der Schweißvorgang zum Verbinden des thermoplastischen Leitungselementes 3 mit dem Verbindungselement 2 beschrieben.

Zum Verschweißen des Verbindungselementes 2 mit den Leitungselementen 3, werden die Leitungselemente 3 in das Verbindungselement 2 eingesteckt. Weiters werden in das Schweißgerät 10 Informationen zur Beschaffenheit des Verbindungselementes 2 eingegeben.

Weiters wird der erste Anschlusspunkt 8 und der zweite Anschlusspunkt 9 des Verbindungselementes 2 mit dem Schweißgerät 10 verbunden, sodass eine Verschweißung des Verbindungselementes 2 mit dem Leitungselement 3 ermöglicht wird.

Beim Schweißvorgang an sich wird der erste Anschlusspunkt 8 und der zweite Anschlusspunkt 9 mit Strom beaufschlagt, sodass sich der Widerstandsheizdraht 7 erhitzt, wodurch das Verbindungselement 2 im Schweißbereich 5 aufgeschmolzen wird. Wenn die Leitungselemente 3 korrekt in das Verbindungselement 2 eingesteckt sind, kann das Verbindungselement 2 mit dem Leitungselement 3 verschmelzen, wodurch eine ausreichend dichte Verbindung der Leitungselemente 3 mit dem Verbindungselement 2 erreicht wird.

Wenn, wie in Fig. 1 am rechten Leitungselement 3 dargestellt, das Leitungselement 3 nicht korrekt in das Verbindungselement 2 eingesteckt ist, kann dies dazu führen, dass jener Abschnitt des Schweißbereiches 5 des Verbindungselementes 2, an welchem das Leitungselement 3 nicht anliegt, durch die fehlende Wärmeabfuhr unkontrolliert aufschmilzt. Dadurch kann es in diesem Bereich zu unkontrollierten Austritten des Materials des Verbindungselementes 2 kommen.

Durch diesen Austritt von Material des Verbindungselementes 2 kann darüber hinaus vorkommen, dass zwei Wicklungen des Widerstandsheizdrahtes 7 durch die entstehenden Verschiebungen einander kontaktieren, wodurch die Wicklungsschlaufe dieser beiden nebeneinander liegenden Wicklungen des Widerstandsheizdrahtes 7 kurzgeschlossen und somit überbrückt wird. Durch das erfindungsgemäße Verfahren kann dieser Effekt überraschenderweise dazu genutzt werden, um mittels dem Schweißgerät 10 detektieren zu können, ob die Verschweißung korrekt durchgeführt wird und gegebenenfalls den Schweißvorgang zu stoppen und/oder vom Schweißgerät eine Fehlermeldung auszugeben.

In der Fig. 2a ist der zeitliche Verlauf des Schweißstromes 17 und der Schweißspannung 18 dargestellt. Die vergangene Zeit in Sekunden ist hierbei auf der Abszisse dargestellt. Die Größe des Schweißstromes 17 ist in Ampere auf der Ordinate dargestellt. Die Größe der der Schweißspannung 18 ist in Volt auf der Ordinate dargestellt.

Wie aus Fig. 2a ersichtlich, kann vorgesehen sein, dass die Schweißspannung 18 beim Aktivieren des Schweißgerätes 10 zur Verschweißung auf einen bestimmten Wert angehoben wird und anschließend konstant auf diesen Wert gehalten wird. Der Schweißstrom 17 kann über den zeitlichen Verlauf des Verschweißvorganges gesehen abfallen, da durch die Erhitzung des Widerstandsheizdrahtes 7 ein Leiterwiderstand 19 des Widerstandsheizdrahtes 7 ansteigt.

Der Verlauf des Schweißstromes 17 wie er in Fig. 2a dargestellt ist, ist jener Verlauf wie er bei einem korrekt verschweißten Verbindungselement 2 auftritt und als Istwert 21 des Schweißstromes 17 bei einem korrekt verschweißten Verbindungselement 2 ermittelt wurde. Der aus Fig. 2a ersichtliche zeitliche Verlauf des Schweißstromes 17 kann somit als Sollwert 20 des Schweißstromes 17 für ein vergleichbares Verbindungselement 2 herangezogen werden. In der vorliegenden Darstellung nach Fig. 2a ist somit der Istwert 21 des Schweißstromes 17 deckungsgleich mit dem Sollwert 20 des Schweißstromes 17.

Der Sollwert 20 des Schweißstromes 17 ist für jede unterschiedliche Ausführung des Verbindungselementes 2 jedoch unterschiedlich. Zur Ermittlung des Sollwertes 20 des Schweißstromes 17 können Schweißversuche mit den einzelnen unterschiedlichen Ausführungen des Verbindungselementes 2 durchgeführt werden. Alternativ dazu ist es auch denkbar, dass der Verlauf des Sollwertes 20 des Schweißstroms 17 rechnerisch ermittelt wird.

Aus dem Sollwert 20 des Schweißstromes 17 kann eine Sollwerttoleranz 22 des Schweißstromes 17 berechnet werden, welche zur Kontrolle der korrekten Verschweißung dienen kann. Die Sollwerttoleranz 22 des Schweißstromes 17 kann an einer Unterseite 23 des Sollwertes 20 des Schweißstromes 17 und/oder an einer Oberseite 24 des Sollwertes 20 des Schweißstromes 17 angeordnet sein. Somit können Ausschläge des Schweißstromes 17 entweder nur nach unten oder nur nach oben oder sowohl nach unten als auch nach oben erfasst werden.

Der Istwert 21 des Schweißstromes 17 kann in einem Abfrageintervall 25 abgefragt werden, wobei im Abstand des Abfrageintervalls 25 eine Messung des Istwertes 21 des Schweißstromes 17 durchgeführt wird.

Fig. 2b zeigt den zeitlichen Verlauf des Leiterwiderstandes 19 über den Schweißvorgang. Die vergangene Zeit in Sekunden ist hierbei auf der Abszisse dargestellt. Die Größe des Leiterwiderstandes 19 ist in Ohm auf der Ordinate dargestellt. Wie aus Fig. 2b ersichtlich, steigt der Leiterwiderstand 19 über den zeitlichen Verlauf an.

Der Verlauf des Leiterwiderstandes 19 wie er in Fig. 2b dargestellt ist, ist jener Verlauf wie er bei einem korrekt verschweißten Verbindungselement 2 auftritt und als Istwert 27 des Leiterwiderstandes 19 bei einem korrekt verschweißten Verbindungselement 2 ermittelt wurde. Der aus Fig. 2b ersichtliche zeitliche Verlauf des Leiterwiderstandes 19 kann somit als Sollwert 26 des Leiterwiderstandes 19 für ein vergleichbares Verbindungselement 2 herangezogen werden. In der vorliegenden Darstellung nach Fig. 2b ist somit der Istwert 27 des Leiterwiderstandes 19 deckungsgleich mit dem Sollwert 26 des Leiterwiderstandes 19.

Wie aus Fig. 2b ersichtlich, steigt der Istwert 27 des Leiterwiderstandes 19 über den Zeitlichen Verlauf mit fortschreitender Erwärmung des Widerstandsheizdrahtes 7 an.

Der Sollwert 26 des Leiterwiderstandes 19 ist für jede unterschiedliche Ausführung des Verbindungselementes 2 jedoch unterschiedlich. Zur Ermittlung des Sollwertes 26 des Leiterwiderstandes 19 können Schweißversuche mit den einzelnen unterschiedlichen Ausführungen des Verbindungselementes 2 durchgeführt werden. Alternativ dazu ist es auch denkbar, dass der Verlauf des Sollwertes 26 des Leiterwiderstandes 19 rechnerisch ermittelt wird.

Aus dem Sollwert 26 des Leiterwiderstandes 19 kann eine Sollwerttoleranz 28 des Leiterwiderstandes 19 berechnet werden, welche zur Kontrolle der korrekten Verschweißung dienen kann. Die Sollwerttoleranz 28 des Leiterwiderstandes 19 kann an einer Unterseite 23 des Sollwertes 26 des Leiterwiderstandes 19 und/oder an einer Oberseite 24 des Sollwertes 26 des Leiterwiderstandes 19 angeordnet sein. Somit können Ausschläge des Leiterwiderstandes 19 entweder nur nach unten oder nur nach oben oder sowohl nach unten als auch nach oben erfasst werden.

Der Istwert 27 des Leiterwiderstandes 19 kann in einem Abfrageintervall 25 abgefragt werden, wobei im Abstand des Abfrageintervalls 25 eine Messung des Istwertes 27 des Leiterwiderstandes 19 durchgeführt wird.

In der Fig. 3a ist der zeitliche Verlauf des Schweißstromes 17 bei einem nicht korrekt verbundenen Verbindungselement 2 dargestellt, wobei wiederum für gleiche Elemente gleiche Bezugszeichen bzw. Elementbezeichnungen wie in der vorangegangenen Fig. 2a verwendet werden. Um unnötige Wiederholungen zu vermeiden, wird auf die detaillierte Beschreibung in der vorangegangenen Fig. 2a hingewiesen bzw. Bezug genommen.

Wie aus Fig. 3a ersichtlich, kann es bei einem nicht korrekt verbunden Verbindungselement 2 dazu kommen, dass der Istwert 21 des Schweißstromes 17 ansteigt, wenn zwei oder mehrere Windungen des Widerstandsheizdrahtes 7 miteinander in Berührung kommen und somit kurzgeschlossen werden. Der Istwert 21 des Schweißstromes 17 kann hierbei außerhalb der Sollwerttoleranz 22 des Schweißstromes 17 liegen, wodurch ein Fehlerkriterium ermittelt werden kann.

In der Fig. 3a ist der zeitliche Verlauf des Schweißstromes 17 bei einem nicht korrekt verbundenen Verbindungselement 2 dargestellt, wobei wiederum für gleiche Elemente gleiche Bezugszeichen bzw. Elementbezeichnungen wie in der vorangegangenen Fig. 2a verwendet werden. Um unnötige Wiederholungen zu vermeiden, wird auf die detaillierte Beschreibung in der vorangegangenen Fig. 2a hingewiesen bzw. Bezug genommen.

In Fig. 3b ist der korrespondierende Verlauf des Istwertes 27 des Leiterwiderstandes 19 eines nicht korrekt verschweißten Verbindungselementes 2 dargestellt, wobei wiederum für gleiche Elemente gleiche Bezugszeichen bzw. Elementbezeichnungen wie in der vorangegangenen Fig. 2b verwendet werden. Um unnötige Wiederholungen zu vermeiden, wird auf die detaillierte Beschreibung in der vorangegangenen Fig. 2b hingewiesen bzw. Bezug genommen.

Wie aus Fig. 3b ersichtlich, hat über den zeitlichen Verlauf der Verschweißung der Istwert 27 des Leiterwiderstandes 19 die an der Unterseite 23 des Sollwertes 26 des Leiterwiderstandes 19 angeordnete Sollwerttoleranz 28 unterschritten. Dies kann als Fehlerkriterium herangezogen werden, um den Schweißprozess vorzeitig zu stoppen und/oder eine Fehlermeldung auszugeben.

Fig. 4 zeigt eine Detailansicht des Details X aus Fig. 3b, wobei wiederum für gleiche Elemente gleiche Bezugszeichen bzw. Elementbezeichnungen wie in der vorangegangenen Fig. 3b verwendet werden. Um unnötige Wiederholungen zu vermeiden, wird auf die detaillierte Beschreibung in der vorangegangenen Fig. 3b hingewiesen bzw. Bezug genommen.

Anhand der Fig. 4 wird ein Ausführungsbeispiel beschrieben, wie ein Fehlerkriterium zum Stoppen des Schweißvorganges vor dem Ende der geplanten Schweißdauer definiert werden kann.

Sobald der Istwert 27 des Leiterwiderstandes 19 unter die Sollwerttoleranz 28 des Leiterwiderstandes 19 abfällt und dies vom Schweißgerät 10 detektiert wird, kann dieses Ereignis als Startereignis A bezeichnet werden. Ab diesem Startereignis A beginnt ein Störungszeitraum 16 zu laufen.

Wenn nun der Istwert 27 des Leiterwiderstandes 19 über den kompletten Störungszeitraum 16 hinaus außerhalb der Sollwerttoleranz 28 des Leiterwiderstandes 19 liegt, so wird dem Störungszähler 15 eine Störungsmeldung übermittelt. Am Ende des ersten Störungszeitraums 16 beginnt ein zweiter Störungszeitraum 16 zu laufen, wobei ebenfalls eine Störungsmeldung an den Störungszähler 15 übermittelt wird, wenn über den gesamten Störungszeitraum 16 die Sollwerttoleranz 28 des Leiterwiderstandes 19 vom Istwert 27 des Leiterwiderstandes 19 unterschritten wird.

Insbesondere kann festgelegt sein, dass das Fehlerkriterium erreicht wird, wenn im Störungszähler 15 eine gewisse Anzahl an Störungsmeldungen gezählt werden. Im vorliegenden Ausführungsbeispiel nach Fig. 4 liegen beispielsweise drei Störungsmeldungen vor.

Fig. 5 zeigt einen weiteren Verfahrensablauf, welcher bei einem Schweißvorgang auftreten kann, wobei wiederum für gleiche Elemente gleiche Bezugszeichen bzw. Elementbezeichnungen wie in der vorangegangenen Fig. 3b verwendet werden. Um unnötige Wiederholungen zu vermeiden, wird auf die detaillierte Beschreibung in der vorangegangenen Fig. 3b hingewiesen bzw. Bezug genommen.

Wie aus Fig. 5 ersichtlich, kann bei Unterschreiten der Sollwerttoleranz 28 der Störungszeitraum 16 zu laufen beginnen. Wenn allerdings innerhalb des Störungszeitraumes 16 der Istwert 27 des Leiterwiderstandes 19 innerhalb die Sollwerttoleranz 28 des Leiterwiderstandes 19 zurückkehrt, so wird keine Fehlermeldung an den Störungszähler 15 abgegeben. Bei einem erneuten Unterschreiten der Sollwerttoleranz 28 des Leiterwiderstandes 19 vom Istwert 27 des Leiterwiderstandes 19 beginnt der Störungszeitraum 16 von neuem zu Laufen. Da im vorliegenden Ausführungsbeispiel über den kompletten Störungszeitraum 16 hinweg ein Unterschreiten der Sollwerttoleranz 28 vorliegt, wird am Ende des Störungszeitraums 16 dem Störungszähler 15 eine Fehlermeldung übermittelt. Unmittelbar an diesen zweiten Störungszeitraum 16 anschließend beginnt ein dritter Störungszeitraum 16 zu laufen. Da allerdings nicht über den kompletten dritten Störungszeitraum 16 hinweg die Sollwerttoleranz 28 des Leiterwiderstandes 19 unterschritten wird, wird auch hier keine Störungsmeldung an den Störungszähler 15 ausgegeben. Bei einem erneuten Unterschreiten der Sollwerttoleranz 28 beginnt der Störungszeitraum 16 erneut zu laufen. Da im vorliegenden Ausführungsbeispiel der Istwert 27 des Leiterwiderstandes 19 über den kompletten Störungszeitraum 16 hinweg die Sollwerttoleranz 28 des Leiterwiderstandes 19 unterschreitet, wird in diesem Fall im Störungszähler 15 eine weitere Störungsmeldung generiert. Im vorliegenden Ausführungsbeispiel nach Fig. 5 sind somit im sichtbaren Ausschnittdetail zwei Störungsmeldungen an den Störungszähler 15 übermittelt worden. Als Fehlerkriterium kann festgelegt sein, dass der Schweißprozess gestoppt wird, wenn im Störungszähler 15 zwei Störungsmeldungen gezählt werden, was im vorliegenden Ausführungsbeispiel dazu führen würde, dass am Ende des vierten Störungszeitraums 16 das Fehlerkriterium erreicht wird.

Bei jedem Neustart eines Schweißprozesses kann vorgesehen sein, dass der Störungszähler 15 wieder auf null gesetzt wird.

Die in den Fig. 4 und 5 beschriebenen Vorgänge können natürlich mutatis mutandis auch bei der Erfassung des Istwertes 21 des Schweißstromes 17 angewandt werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Schweißanordnung
- 2: Verbindungselement
- 3: Leitungselement
- 4: Körper
- 5: Schweißbereich
- 6: Heizelement
- 7: Widerstandsheizdraht
- 8: erster Anschlusspunkt
- 9: zweiter Anschlusspunkt
- 10: Schweißgerät
- 11: Anschlag
- 12: Steuereinheit
- 13: Eingabeinterface
- 14: Anzeigeeinheit
- 15: Störungszähler
- 16: Störungszeitraum
- 17: Schweißstrom
- 18: Schweißspannung
- 19: Leiterwiderstand
- 20: Sollwert Schweißstrom
- 21: Istwert Schweißstrom
- 22: Sollwerttoleranz Schweißstrom
- 23: Unterseite Sollwert
- 24: Oberseite Sollwert
- 25: Abfrageintervall
- 26: Sollwert Leiterwiderstand
- 27: Istwert Leiterwiderstand
- 28: Sollwerttoleranz Leiterwiderstand

## Patentansprüche

1. Verfahren zum Verbinden eines thermoplastischen Leitungselementes (3) mit einem Verbindungselement (2) umfassend die Verfahrensschritte:
- Bereitstellen des zumindest einen thermoplastischen Leitungselementes (3);
- Bereitstellen des Verbindungselementes (2), welches einen thermoplastischen Körper (4) aufweist, wobei ein Heizelement (6) im Körper (4) eingebettet ist, welches in einem Schweißbereich (5) zur Erzeugung von Wärme zur Verschweißung des Körpers (4) mit dem zumindest einen Leitungselement (3) dient;
- Fügen des Verbindungselementes (2) mit dem zumindest einen thermoplastischen Leitungselement (3);
- Bereitstellen eines Schweißgerätes (10) zum Verschweißen des Verbindungselementes (2) mit dem zumindest einen thermoplastischen Leitungselement (3);
- Eingeben von Informationen über das zu verschweißende Verbindungselement (2) in das Schweißgerät (10);
- Verschweißen des Verbindungselementes (2) mit dem zumindest einen thermoplastischen Leitungselement (3) durch Erzeugung von Wärme im Schweißbereich (5) mittels des Schweißgerätes (10),
wobei
vom Schweißgerät (10) das Verschweißen des Verbindungselementes (2) mit dem zumindest einen thermoplastischen Leitungselement (3) vor dem Ende der geplanten Schweißdauer gestoppt wird und/oder vom Schweißgerät (10) eine Fehlermeldung ausgegeben wird, wenn ein Fehlerkriterium erreicht wird, **dadurch gekennzeichnet, dass** das Fehlerkriterium erreicht wird, wenn in einem im Schweißgerät (10) implementierten Störungszähler (15) eine bestimmte Anzahl an Störungsmeldungen summiert werden.

2. Verfahren nach Anspruch 1, **dadurch gekennzeichnet, dass** dem Störungszähler (15) eine Störungsmeldung addiert wird, wenn über einen Störungszeitraum (16) ein Istwert (21) des Schweißstromes (17) außerhalb einer Sollwerttoleranz (22) eines Sollwertes (20) des Schweißstromes (17) liegt.

3. Verfahren nach Anspruch 1 oder 2, **dadurch gekennzeichnet, dass** dem Störungszähler (15) eine Störungsmeldung addiert wird, wenn über einen Störungszeitraum (16) ein Istwert (27) des Leiterwiderstandes (19) des Heizelementes (6) außerhalb einer Sollwerttoleranz (28) eines Sollwertes (26) des Leiterwiderstandes (19) des Heizelementes (6) liegt.

4. Verfahren nach Anspruch 2 oder 3, **dadurch gekennzeichnet, dass** der Zeitrahmen des Störungszeitraumes (16) in Abhängigkeit von den erfassten Informationen über das zu verschweißende Verbindungselement (2) festgelegt wird.

5. Verfahren nach einem der Ansprüche 2 bis 4, **dadurch gekennzeichnet, dass** der Zeitrahmen des Störungszeitraumes (16) zwischen 1sec und 40sec, insbesondere zwischen 5sec und 30sec, bevorzugt zwischen 8sec und 12sec festgelegt wird.

6. Verfahren nach einem der Ansprüche 2 bis 5, **dadurch gekennzeichnet, dass** die Sollwerttoleranz (22) des Sollwertes (20) des Schweißstromes (17) und/oder die Sollwerttoleranz (28) des Sollwertes (26) des Leiterwiderstandes (19) des Heizelementes (6) in Abhängigkeit von den erfassten Informationen über das zu verschweißende Verbindungselement (2) festgelegt wird.

7. Verfahren nach einem der Ansprüche 2 bis 6, **dadurch gekennzeichnet, dass** die Sollwerttoleranz (22) des Sollwertes (20) des Schweißstromes (17) und/oder die Sollwerttoleranz (28) des Sollwertes (26) des Leiterwiderstandes (19) des Heizelementes (6) zwischen 0,1% und 10%, insbesondere zwischen 1% und 5%, bevorzugt zwischen 1,5% und 3% des Betrages des jeweiligen Sollwertes (20, 26) beträgt.

8. Verfahren nach einem der Ansprüche 1 bis 7, **dadurch gekennzeichnet, dass** das Fehlerkriterium erreicht wird, wenn im Störungszähler (15) mehr als zwei Störungsmeldungen, insbesondere mehr als drei Störungsmeldungen, bevorzugt mehr als fünf Störungsmeldungen addiert werden.

9. Verfahren nach einem der Ansprüche 2 bis 8, **dadurch gekennzeichnet, dass** die Sollwerttoleranz (28) des Sollwertes (26) des Leiterwiderstandes (19) des Heizelementes (6) ausschließlich an der Unterseite (23) des Sollwertes (26) des Leiterwiderstandes (19) definiert ist.

10. Verfahren nach einem der vorhergehenden Ansprüche, **dadurch gekennzeichnet, dass** das Fehlerkriterium erreicht wird, wenn in einem im Schweißgerät (10) implementierten Störungszähler (15) vier Störungsmeldungen summiert werden, wobei dem Störungszähler (15) eine Störungsmeldung addiert wird, wenn über einen Störungszeitraum (16) ein Istwert (27) des Leiterwiderstandes (19) des Heizelementes (6) außerhalb einer Sollwerttoleranz (28) eines Sollwertes (26) des Leiterwiderstandes (19) des Heizelementes (6) liegt, wobei der Zeitrahmen des Störungszeitraumes (16) zwischen 8sec und 12sec festgelegt wird und wobei die Sollwerttoleranz (28) des Sollwertes (26) des Leiterwiderstandes (19) des Heizelementes (6) zwischen 1,5% und 3% des Betrages des jeweiligen Sollwertes (26) beträgt.

11. Schweißgerät (10) zum Verschweißen eines thermoplastischen Leitungselementes (3) mit einem Verbindungselement (2), wobei das Schweißgerät eine Steuereinheit (12) und ein Eingabeinterface (13) zum Eingeben von Informationen über das zu verschweißende Verbindungselement (2) aufweist, wobei das Eingabeinterface (13) mit der Steuereinheit (12) gekoppelt ist, wobei das Schweißgerät (10) derart ausgebildet ist, dass das Verschweißen des Verbindungselementes (2) mit dem zumindest einen thermoplastischen Leitungselement (3) vor dem Ende der geplanten Schweißdauer stoppbar ist und/oder vom Schweißgerät (10) eine Fehlermeldung ausgebbar ist, wenn ein Fehlerkriterium erreicht wird, **dadurch gekennzeichnet, dass** im Schweißgerät (10) ein Störungszähler (15) implementiert ist, wobei das Schweißgerät (10) derart konfiguriert ist, dass das Fehlerkriterium erreicht wird, wenn eine bestimmte Anzahl an Störungsmeldungen summiert werden.

## Claims

1. A method for connecting a thermoplastic line element (3) to a connecting element (2) comprising the method steps:
- providing the at least one thermoplastic line element (3);
- providing the connecting element (2) having a thermoplastic body (4), wherein a heating element (6) is embedded in the body (4) for generating heat in a welding region (5) for welding the body (4) to the at least one line element (3);
- joining the connecting element (2) to the at least one thermoplastic line element (3);
- providing a welding device (10) for welding the connecting element (2) to the at least one thermoplastic line element (3);
- inputting information about the connecting element (2) to be welded into the welding device (10);
- welding the connecting element (2) to the at least one thermoplastic line element (3) by generating heat in the welding region (5) by means of the welding device (10), wherein
the welding device (10) stops the welding of the connecting element (2) to the at least one thermoplastic line element (3) before the end of the planned welding duration and/or the welding device (10) outputs an error message if an error criterion is reached, **characterized in that** the error criterion is reached when a certain number of error messages are summed up in an error counter (15) implemented in the welding device (10).

2. The method according to claim 1, **characterized in that** an error message is added to the error counter (15) if, over an error period (16), an actual value (21) of the welding current (17) lies outside a target value tolerance (22) of a target value (20) of the welding current (17).

3. The method according to claim 1 or 2, **characterized in that** an error message is added to the error counter (15) if, over an error period (16), an actual value (27) of the conductor resistance (19) of the heating element (6) lies outside a target value tolerance (28) of a target value (26) of the conductor resistance (19) of the heating element (6).

4. The method according to claim 2 or 3, **characterized in that** the time frame of the error period (16) is determined in dependence of the detected information about the connecting element (2) to be welded.

5. The method according to one of claims 2 to 4, **characterized in that** the time frame of the error period (16) is set between 1sec and 40sec, in particular between 5sec and 30sec, preferably between 8sec and 12sec.

6. The method according to one of claims 2 to 5, **characterized in that** the target value tolerance (22) of the target value (20) of the welding current (17) and/or the target value tolerance (28) of the target value (26) of the conductor resistance (19) of the heating element (6) is determined in dependence of the detected information about the connecting element (2) to be welded.

7. The method according to one of claims 2 to 6, **characterized in that** the target value tolerance (22) of the target value (20) of the welding current (17) and/or the target value tolerance (28) of the target value (26) of the conductor resistance (19) of the heating element (6) is between 0.1% and 10%, in particular between 1% and 5%, preferably between 1.5% and 3% of the amount of the respective target value (20, 26).

8. The method according to any one of claims 1 to 7, **characterized in that** the error criterion is reached when more than two error messages, in particular more than three error messages, preferably more than five error messages are added in the error counter (15).

9. The method according to one of claims 2 to 8, **characterized in that** the target value tolerance (28) of the target value (26) of the conductor resistance (19) of the heating element (6) is defined exclusively at the lower side (23) of the target value (26) of the conductor resistance (19).

10. The method according to one of the preceding claims, **characterized in that** the error criterion is reached when four error messages are summed up in an error counter (15) implemented in the welding device (10), wherein one error message is added to the error counter (15), if, over an error period (16), an actual value (27) of the conductor resistance (19) of the heating element (6) lies outside a target value tolerance (28) of a target value (26) of the conductor resistance (19) of the heating element (6), wherein the time frame of the error period (16) is set between 8sec and 12sec and wherein the target value tolerance (28) of the target value (26) of the conductor resistance (19) of the heating element (6) is between 1.5% and 3% of the amount of the respective target value (26).

11. A welding device (10) for welding a thermoplastic line element (3) to a connecting element (2), the welding device having a control unit (12) and an input interface (13) for inputting information about the connecting element (2) to be welded, the input interface (13) being coupled to the control unit (12), wherein the welding device (10) is designed in such a way that the welding of the connecting element (2) to the at least one thermoplastic line element (3) can be stopped before the end of the planned welding duration and/or an error message may be output by the welding device (10) if an error criterion is reached, **characterized in that** an error counter (15) is implemented in the welding device (10), wherein the welding device (10) is configured such that the error criterion is reached when a certain number of error messages are summed up.

## Revendications

1. Procédé de raccordement d'un élément conducteur thermoplastique (3) avec un élément de raccordement (2) comprenant les étapes suivantes :
- mise à disposition de l'au moins un élément conducteur thermoplastique (3) ;
- mise à disposition de l'élément de raccordement (2), qui comprend un corps thermoplastique (4), dans lequel un élément chauffant (6) est intégré dans le corps (4), qui permet, dans une zone de soudure (5), à générer de la chaleur pour le soudage du corps (4) avec l'au moins un élément conducteur (3) ;
- jonction de l'élément de raccordement (2) avec l'au moins un élément conducteur thermoplastique (3) ;
- mise à disposition d'un appareil de soudage (10) pour le soudage de l'élément de raccordement (2) avec l'au moins un élément conducteur thermoplastique (3) ;
- entrée d'informations sur l'élément de raccordement (2) à souder dans l'appareil de soudage(10) ;
- soudage de l'élément de raccordement (2) avec l'au moins un élément conducteur thermoplastique (3) par la production de chaleur dans la zone de soudure (5) au moyen de l'appareil de soudage (10),
dans lequel
l'appareil de soudage (10) arrête le soudage de l'élément de raccordement (2) avec l'au moins un élément conducteur thermoplastique (3) avant la fin de la durée de soudage prévue et/ou l'appareil de soudage (10) émet un message d'erreur lorsqu'un critère d'erreur est atteint, **caractérisé en ce que** le critère d'erreur est atteint lorsque, dans un compteur d'erreur (15) implémenté dans l'appareil de soudage (10), un nombre déterminé de messages d'erreur est atteint.

2. Procédé selon la revendication 1, **caractérisé en ce que**, au compteur d'erreur (15), est ajouté un message d'erreur lorsque, sur une période d'erreur (16), une valeur effective (21) du courant de soudage (17) se trouve hors d'une tolérance de valeur de consigne (22) d'une valeur de consigne (20) du courant de soudage (17).

3. Procédé selon la revendication 1 ou 2, **caractérisé en ce que**, au compteur d'erreur (15), est ajouté un message d'erreur lorsque, sur une période d'erreur (16), une valeur effective (27) de la résistance du conducteur (19) de l'élément chauffant (6) se trouve hors d'une tolérance de valeur de consigne (28) d'une valeur de consigne (26) de la résistance du conducteur (19) de l'élément chauffant (6).

4. Procédé selon la revendication 2 ou 3, **caractérisé en ce que** le cadre temporel de la période d'erreur (16) est déterminé en fonction des informations relevées concernant l'élément de raccordement (2) à souder.

5. Procédé selon l'une des revendications 2 à 4, **caractérisé en ce que** le cadre temporel de la période d'erreur (16) est déterminé entre 1 s et 40 s, plus particulièrement entre 5 s et 30 s, de préférence entre 8 s et 12 s.

6. Procédé selon l'une des revendications 2 à 5, **caractérisé en ce que** la tolérance de valeur de consigne (22) de la valeur de consigne (20) du courant de soudage (17) et/ou la tolérance de valeur de consigne (28) de la valeur de consigne (26) de la résistance du conducteur (19) de l'élément chauffant (6) est définie en fonction des informations relevées concernant l'élément de raccordement (2) à souder.

7. Procédé selon l'une des revendications 2 à 6, **caractérisé en ce que** la tolérance de valeur de consigne (22) de la valeur de consigne (20) du courant de soudage (17) et/ou la tolérance de valeur de consigne (28) de la valeur de consigne (26) de la résistance du conducteur (19) de l'élément chauffant (6) représente entre 0,1 % et 10 %, plus particulièrement entre 1 % et 5 %, de préférence entre 1,5 % et 3 % de la valeur de consigne (20, 26) respective.

8. Procédé selon l'une des revendications 1 à 7, **caractérisé en ce que** le critère d'erreur est atteint lorsque, dans le compteur d'erreur (15), plus de deux messages d'erreur, plus particulièrement plus de trois messages d'erreur, de préférence plus de cinq messages d'erreur sont ajoutés.

9. Procédé selon l'une des revendications 2 à 8, **caractérisé en ce que** la tolérance de valeur de consigne (28) de la valeur de consigne (26) de la résistance du conducteur (19) de l'élément chauffant (6) est définie exclusivement sur le côté inférieur (23) de la valeur de consigne (26) de la résistance du conducteur (19).

10. Procédé selon l'une des revendications précédentes, **caractérisé en ce que** le critère d'erreur est atteint lorsque, dans un compteur d'erreur (15) implémenté dans l'appareil de soudage (10), sont totalisés quatre messages d'erreur, dans lequel, au compteur d'erreur (15), est ajouté un message d'erreur lorsque, sur une période d'erreur (16), une valeur effective (27) de la résistance du conducteur (19) de l'élément chauffant (6) se trouve hors d'une tolérance de valeur de consigne (28) d'une valeur de consigne (26) de la résistance du conducteur (19) de l'élément chauffant (6), dans lequel le cadre temporel de la période d'erreur (16) est défini entre 8 s et 12 s et dans lequel la tolérance de valeur de consigne (28) de la valeur de consigne (26) de la résistance du conducteur (19) de l'élément chauffant (6) représente entre 1,5 % et 3 % de la valeur de consigne (26) respective.

11. Appareil de soudage (10) pour le soudage d'un élément conducteur thermoplastique (3) avec un élément de raccordement (2), dans lequel l'appareil de soudage comprend une unité de commande (12) et une interface d'entrée (13) pour l'entrée d'informations concernant l'élément de raccordement (2) à souder, dans lequel l'interface d'entrée (13) est couplée avec l'unité de commande (12), dans lequel l'appareil de soudage (10) est conçu de sorte que le soudage de l'élément de raccordement (2) avec l'au moins un élément conducteur thermoplastique (3) peut être arrêté avant la fin de la durée de soudage prévue et/ou l'appareil de soudage (10) peut émettre un message d'erreur lorsqu'un critère d'erreur est atteint, **caractérisé en ce que**, dans l'appareil de soudage (10), est implémenté un compteur d'erreur (15), dans lequel l'appareil de soudage (10) est conçu de sorte que le critère d'erreur est atteint lorsqu'un nombre déterminé de messages d'erreur est totalisé.
